# EUROPÄISCHE PATENTSCHRIFT

(11) **EP 2 337 833 B1**
(45) Veröffentlichungstag und Bekanntmachung des Hinweises auf die Patenterteilung: **01.01.2014**
(21) Anmeldenummer: 09752764.2
(22) Anmeldetag: 12.10.2009
(51) Int. Cl.: C10M 173/02, F16H 57/04, C09K 5/20, C09K 5/10, C09D 201/00, C09D 17/00, C09D 5/08, C23F 11/10

(54) **VERFAHREN ZUR HERSTELLUNG UND ERSTINBETRIEBNAHME EINES GETRIEBES MIT EINEM SCHMIERMITTEL AUF BASIS VON WASSER UND DERARTIGES SCHMIERMITTEL**
METHOD FOR PRODUCING AND OPERATING FOR THE FIRST TIME A TRANSMISSION UNIT WITH A LUBRICANT BASED ON WATER AND SUCH A LUBRICANT
PROCÉDÉ DE FABRICATION ET PREMIÈRE MISE EN SERVICE D'UN SYSTÈME DE TRANSMISSION AVEC UN LUBRIFIANT À BASE AQUEUSE ET LUBRIFIANT DE CE TYPE

(30) Priorität: 10.10.2008 DE 102008051264; 10.07.2009 DE 102009032520
(43) Veröffentlichungstag der Anmeldung: 29.06.2011
(73) Patentinhaber: Magna Steyr Fahrzeugtechnik AG & CO. KG, 8041 Graz (AT)
(72) Erfinder: MAYR, Franz, 8041 Graz (AT); HANDL, Werner, 90518 Altdorf (DE)
(74) Vertreter: Rausch, Gabriele
(86) Internationale Anmeldenummer: PCT/EP2009/063296
(87) Internationale Veröffentlichungsnummer: WO 2010/040860

(56) Entgegenhaltungen:
- EP-A1- 0 078 361
- EP-A1- 1 007 598
- WO-A1-00/43470
- DE-A1- 2 007 229
- US-A- 4 755 311
- US-A1- 2003 013 615
- US-B1- 6 194 357
- US-B1- 6 372 842

## Beschreibung

Die Erfindung betrifft ein Verfahren zur Herstellung und Erstinbetriebnahme eines Getriebes mit einem Schmiermittel auf wässriger Basis, wobei das Getriebe aus dem Gehäuse und den in dieses einzubauenden Drehteilen besteht. Derartige Getriebe kommen in den verschiedensten Anwendungen zum Einsatz, insbesondere in Kraftfahrzeugen als Schalt-, Verteiler- oder Achsantriebgetriebe. Die Drehteile sind Zahnräder, Wellen mit ihren Zahnrädern, Kupplungen, Lagerteilen und gegebenenfalls Synchronringen. Beim Einsatz in Kraftfahrzeugen ist die Leistungsdichte besonders hoch, dadurch sind die Zahnräder hoch belastet und ausreichende Kühlung des Getriebes erfordert besondere Aufmerksamkeit. Das Schmiermittel wirkt dabei auch als Kühlmittel, das die im Getriebe erzeugte Reibungswärme an das Getriebegehäuse weitergibt oder zu einem getrennten Ölkühler fördert.

### Stand der Technik

In der WO 2007/098523 A2 der Anmelderin ist ein Verfahren zur Inbetriebnahme eines Getriebes beschrieben, in dem das Schmiermittel, bestehend aus Wasser, einem Frostschutzmittel und einem Feststoff-Schmiermittel (zum Beispiel Graphit) außerhalb des Getriebes zusammengemischt und dann in das montierte aber noch trockene Getriebe eingefüllt wird. Beim Jungfernlauf am Prüfstand, der bei Hochleistungsgetrieben üblich ist, wird das Schmiermittel dann durch die eintauchenden Zahnräder im Getriebe verteilt. So bildet es auch auf den Zahnrädern einen Schmierfilm. Die Rührwirkung der Zahnräder verhindert dabei die Entmischung des Schmiermittels.

Bei Versuchen hat sich gezeigt, dass diese Tauchschmierung beim Jungfernlauf eine gewisse Zeit braucht, bis die Zahnräder ausreichend benetzt sind. Bis dahin laufen sie trocken, wobei sich Abriebteilchen bilden, die der Lebensdauer vor allem der Lager und Dichtringe abträglich sind. Bei Druckumlaufschmierung dauert es besonders lange, bis die Zahnräder benetzt sind, weshalb das Verfahren für Druckumlaufschmierung weniger geeignet schien. Das ist ein Nachteil, weil Hochleistungsgetriebe oft mit Druckumlaufschmierung betrieben werden. Weiters wurde festgestellt, dass die so erzeugte Beschichtung nicht sehr robust ist und die Rührwirkung der Zahnräder bei gewissen Betriebsbedingungen nicht ausreicht.

Bei der Herstellung eines Getriebes werden die Drehteile nach fertiger mechanischer Bearbeitung zum Schutz vor Korrosion eingeölt beziehungsweise eingefettet und verpackt, um zumindest in eine andere Halle, meist aber zum Getriebehersteller an einem anderen Standort transportiert zu werden. Dort werden sie dann entfettet und schließlich in das Gehäuse eingebaut. Diese Abläufe verursachen erhebliche Arbeits- und Anlagekosten.

Zwar ist es aus der DE 198 54 592 A und aus der US 3,719,598 bekannt, bei der spanabhebenden Bearbeitung von Metallteilen Borverbindungen enthaltende Spülflüssigkeiten einzusetzen. Gemäß der US 3,719,598 enthalten diese auch Fettsäureester. Spülflüssigkeiten für diesen ganz anderen Zweck dienen fast ausschließlich der Wärmeabfuhr. Sie dürfen auf dem Werkstück keine Rückstände hinterlassen.

### Problem/Lösung

Es ist das der Erfindung zugrunde liegende Problem, die Nachteile des Verfahrens der WO 2007/098523 zu beheben, eine Verringerung der Herstellungskosten des Getriebes zu erreichen und die Zusammensetzung der für das erfindungsgemäß verbesserte Verfahren am besten geeigneten Schmier-und Kühlflüssigkeit zu finden.

Diese Aufgabe wird erfindungsgemäß durch ein Verfahren mit den Merkmalen des Patentanspruchs 1 gelöst. Vorteilhafte Ausführungen des erfindungsgemäßen Verfahrens sind Gegenstand der Patentansprüche 2 bis 15.

Der Verfahrensablauf beginnt schon bei der Fertigung der Drehteile. Dadurch, dass die fertig bearbeiteten Drehteile nicht eingefettet, sondern bereits in diesem frühen Stadium mit einer schützenden Beschichtung versehen werden, kann das Entfetten der Drehteile unmittelbar vor deren Einbau unterbleiben. Das spart nicht nur Kosten, sondern vermeidet auch den Einsatz von toxischen und/oder umweltschädlichen Lösungsmitteln. Die Beschichtung der angegebenen Zusammensetzung wird durch Trocknen besonders fest und haltbar. Sie stellt nicht nur eine wirksame Konservierung während des Transportes dar, sondern bildet auf Grund des in ihr enthaltenen Feststoff-Schmiermittels mit der später ins Getriebe gefüllten Kühlflüssigkeit das Schmiermittel in einer Weise, die die Nachteile der obigen WO2007/098523 behebt. Die Beschichtung ist nicht nur robust, sondern auch lange haltbar. Im Betrieb stellt sich im Zusammenwirken mit den im Schmiermittel enthaltenen Teilchen des Feststoff-Schmiermittels (in der älteren prioritätsbegründenden Anmeldung ist es als Füllstoff bezeichnet) und dessen weiteren Komponenten ein Gleichgewicht zwischen dem Abrieb der Beschichtung und deren Regenerierung ein.

Das Gemisch für die Beschichtung auf Basis einer verdampfbaren Flüssigkeit (Schritt a) des 1. Anspruchs) - und keines toxischen und/oder umweltschädlichen Lösungsmittels - wird durch Sprühen, Eintauchen oder anderswie auf die

Drehteile aufgebracht und dann getrocknet. Die verdampfbare Flüssigkeit ist Wasser und/oder Alkohol (Anspruch 4). Beide sind umweltverträglich und für die Trocknungsanlage unkompliziert. Besonders gut geeignet ist Wasser, wenn es auch etwas langsamer als Alkohol verdampft, weil es keine Rückführung erfordert. Bei der praktisch eingesetzten Schichtdicke am Drehteil und geringem Flüssigkeitsanteil ist die Trocknung bis zum vollständigen Verdampfen der Flüssigkeit schnell und einfach. Sie kann zum Beispiel mit Heißluft oder durch Bestrahlung mit infrarotem Licht erfolgen. Mit der getrockneten Beschichtung versehen werden die Drehteile verpackt und zur Getriebemontage transportiert, oder zwischengelagert. Dort werden sie mit der Beschichtung in das Getriebegehäuse eingesetzt.

Erst wenn das Getriebe fertig zusammengebaut ist, wird es mit der Kühlflüssigkeit befüllt, welche in der erfindungsgemäßen Weise mit der Beschichtung die Schmierflüssigkeit bildet. Die Kühlflüssigkeit ist im Wesentlichen Wasser, dem gegebenenfalls ein Frostschutzmittel - zum Beispiel ein Glykol - und weitere Hilfsstoffe zugefügt sind (Anspruch 5).

Bevor auf die Wirkungsweise des Verfahrens weiter eingegangen wird, sind zwei Varianten der Verfahrensführung zu unterscheiden, je nach dem Zeitpunkt der Zugabe des chemischen Korrosionsschutzmittels beziehungsweise Konservierungsmittels, was auf dasselbe hinausläuft. Es wird entweder bereits der die Beschichtung bildenden Mischung gemäß Schritt a) des 1. Anspruchs hinzugefügt (Anspruch 2) oder erst in Schritt b) der in das montierte Getriebe gefüllten Kühlflüssigkeit (Anspruch 3).

Die Beschichtung alleine bietet bereits einen guten Korrosionsschutz. Das plättchen- oder stäbchenförmig Feststoff-Schmiermittel, dessen Teilchen ein sehr großes Aspektverhältnis, also großes Verhältnis von Teilchendurchmesser bzw. -länge zu Teilchendicke, aufweisen, lagert sich an der Oberfläche des Drehteils ab, sodass sehr lange Diffusionswege für korrosiv wirkende Stoffe entstehen, die mit der beschichteten Oberfläche in Kontakt kommen. Somit ist bei der Vorgangsweise gemäß Anspruch 2 bereits ein physikalisch wirksamer Korrosionsschutzmechanismus gegeben, sodass das Korrosionsschutzmittel erst der Kühlflüssigkeit zugesetzt werden braucht. Trotzdem kann es unter gewissen Umständen vorteilhaft sein, bereits dem die Beschichtung bildenden Gemisch auch das chemisch wirksame Korrosionsschutzmittel beizumischen (Anspruch 3).

Insbesondere in Kombination mit den vorgesehenen Füllstoffen (unter anderem dem Feststoff-Schmiermittel) hat sich nämlich gezeigt, dass bei Hinzufügung eines chemisch wirksamen Korrosionsschutzmittels eine Beschichtung hergestellt werden kann, welche nicht nur keine oder nur eine geringe Zahl von Kapillarkanälen für Gase wie Luft aufweist, sondern die beschichtete Oberfläche auch auf chemischem Weg schützt. Günstig ist es auch, dass die Korrosionsschutzmittel gemäß Ansprüchen 9 und/oder 10 in Wasser (beziehungsweise wasserhaltigen Flüssigkeiten) gut löslich sind. Damit ist auch gesagt, dass in dem flüssigen Schmiermittel während des späteren Dauerbetriebes die chemische Wirkung des Korrosionsschutzmittels die Wesentliche ist. Entsprechend wird es gemäß Anspruch 2 der Kühlflüssigkeit zugesetzt.

Nach Einbau der beschichteten Drehteile in das Getriebe und Befüllen des fertig montierten Getriebes wird es dem Jungfernlauf unterzogen. Dabei wird zunächst nur die Kühlflüssigkeit im Getriebe verteilt, sei es durch die Rührwirkung der Zahnräder, sei es durch eine Umlaufpumpe. Da die Beschichtung der Zahnräder bereits ein Feststoff-Schmiermittel enthält, erfolgt dabei kein sonst bei Trockenreibung anfallender metallischer Abrieb. Erst durch den (nicht metallischen) Abrieb der das Feststoff-Schmiermittel enthaltenden Beschichtung auf den Drehteilen und Verteilung des Abriebes in der Kühlflüssigkeit wird das eigentliche Schmiermittel (das Schmiermittel auf wässriger Basis) für den weiteren Betrieb gebildet.

In dem frühen Stadium des Jungfernlaufes gelangt die Kühlflüssigkeit auch zu den abseits der Zahnräder im Gehäuse angeordneten Dichtringen und Lagern (in der Regel sind es Wälzlager), an denen sich so ein an Feststoff-Schmiermittel etwas ärmerer Schmierfilm bildet. Das kommt deren Lebensdauer zugute. Damit ist der Erkenntnis Rechnung getragen, dass verschiedene Komponenten (Zahnräder, Lager, Dichtringe) verschiedene Anforderung an den Schmierstoff stellen, was bei Einsatz eines Schmieröles nicht berücksichtigt werden kann.

Das von den Drehteilen teilweise abgetragene Feststoff-Schmiermittel wird so in der Kühlflüssigkeit suspendiert beziehungsweise dispergiert. Der Abrieb macht also erst aus dem Kühlmittel ein Schmiermittel. Die in der Beschichtung enthaltene Menge an Feststoff-Schmiermittel ist in Kenntnis der Füllmenge des Getriebes so festzulegen, dass sich bei Beendigung des Jungfernlaufes die als optimal festgestellte Konzentration eingestellt hat. Dabei ist dem auf dem Drehteil bleibenden Teil der Beschichtung Rechnung zu tragen.

### Rezeptur

Die Zusammensetzung des gemäß Anspruch 1 hergestellten flüssigen Schmiermittels ist Gegenstand der Ansprüche 6 bis 15. Bevorzugt ist es im Rahmen der Erfindung, um einen möglichst dichten Korrosionsschutzüberzug mit wenigen oder im Wesentlichen keinen Kapillarkanälen zu erhalten, dass das Gemisch ein plättchenförmiges oder stäbchenförmiges Feststoff-Schmiermittel (in der älteren prioritätsbegründenden Anmeldung auch als Füllstoff bezeichnet) enthält.

Gut geeignete Feststoff-Schmiermittel sind: Graphit in verschiedenen Konfigurationen (vorzugsweise flockig), Molybdänsulfid, Glimmer, hexagonales Bornitrid, Zinn, PTFE-Mikropulver, Talkum, Kaolin, Eisenglimmer oder geschwefelte Fettsäuren (Anspruch 7), mit einem durchschnittlichen Teilchendurchmesser, im Falle plättchenförmiger Konfiguration kleiner als 15 µm bis 7,5 µm (Anspruch 8), abhängig von Größe, Bauweise und Toleranzen der zu beschichtenden Bauteile, weil er zu deren Konservierung beiträgt und der Beschichtung nebst den erforderlichen Schmiereigenschaften auch optimale Festigkeit und Lebensdauer verleiht. Für besonders hohe Anforderungen beträgt er 0,5 bis 5,0 µm. Im etwa gleichen Mischungsverhältnis ist auch Glimmerpulver geeignet (Anspruch 8).

Als chemisches Konservierungsmittel und Korrosionsschutzmittel sind eine Reihe fettfreier Stoffe bekannt. Besonders bewährt haben sich Verbindungen der Borsäure (vorzugsweise eines Borsäureaminesters, insbesondere ein Reaktionsprodukt aus Borsäureanhydrid mit Triäthanolamin) (Anspruch 9), oder ein Carbonsäuresalz ausgewählt aus der Gruppe bestehend aus Zinkstearat, Calciumstearat, Aluminiumstearat, Zinkoleat, Calciumoleat und Aluminiumoleat (Anspruch 10). Beiderlei ergeben gemeinsam mit den Partikeln des Feststoff-Schmiermittels eine besonders robuste Beschichtung, die den besonderen Anforderungen des erfindungsgemäßen Verfahrens genügt. Diese Mittel können wahlweise entweder gleich der Mischung gemäß Merkmal a) des 1. Anspruchs hinzugefügt werden, sodass sie in der Beschichtung enthalten sind, oder erst nachher im Verfahrensschritt b).

Bei Einsatz des Getriebes im Freien ist der Kühlflüssigkeit naturgemäß ein Frostschutzmittel beizumischen. Das in der Kühlflüssigkeit enthaltene Frostschutzmittel ist ein Kohlenwasserstoff mit mindestens zwei Hydroxilgruppen beziehungsweise eine solche Verbindungen enthaltende Substanz (Anspruch 5), praktisch eines der bekannten Frostschutzmittel.

Als Tenside können grundsätzlich Stoffe eingesetzt werden, die die Oberflächenspannung senken. Bevorzugt ist es ein Acetylenderivat, insbesondere Acetylenglykol (Anspruch 12). Acetylenderivate senken sowohl die statische als auch die dynamische Oberflächenspannung und haben den Vorteil, gute Benetzungsleistungen zu bringen, ohne dass toxische oder umweltschädliche Nebeneffekte zu befürchten wären. Die abgesenkte dynamische Oberflächenspannung sichert den erfindungswesentlichen Austausch des Feststoff-Schmiermittels zwischen dem flüssigen Schmiermittel und der Beschichtung der Zahnräder während des späteren Dauerbetriebes. Darüber hinaus haben Acetylenderivate auch Korrosionsschutzwirkung, im Zusammenwirken mit den oben erwähnten Korrosionsschutzmitteln wird diese sogar verstärkt.

In Weiterbildung der Erfindung können zur Stärkung der Beschichtung und zur Erleichterung deren Regeneration im Laufe des späteren Betriebes noch weitere Zusätze vorgesehen sein. Solche Zusätze sind, einzeln oder in Kombination: Methylcellulose (Anspruch 13) zur weiteren Verbesserung der Haftung und der Abriebsbeständigkeit der Beschichtung bereits während des Schrittes a) des 1. Anspruches; Polyvinylalkohol (Anspruch 14), der wasserlöslich und daher als Verdickungsmittel gut geeignet ist in Schritt a) oder Schritt b) des 1. Anspruches; ein Polysaccharid als Bindemittel (Anspruch 15). Entsprechend den vorstehenden Erläuterungen ist das erfindungsgemäße Schmiermittel insgesamt frei von Phosphaten, was im Hinblick auf eine Umweltverträglichkeit einen weiteren Vorteil darstellt.

### Figuren

- Fig. 1:: Beispiel eines Getriebes, in dem das erfindungsgemäße Verfahren zur Anwendung kommt, in schematischer Darstellung,
- Fig. 2:: Ablaufschema zum erfindungsgemäßen Verfahren.

### Beschreibung

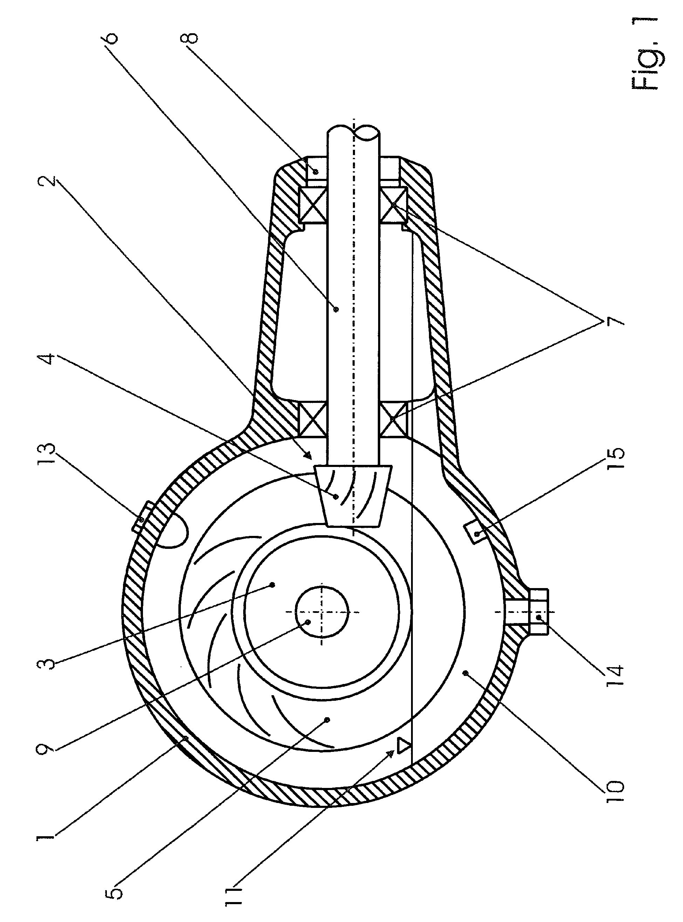

Das Getriebe in Fig. 1, das Achsgetriebe eines Kraftfahrzeuges, besteht aus einem Gehäuse 1 und in dessen Innerem einem Hypoidtrieb 2 und einem Differential 3. Der Hypoidtrieb 2 umfasst einen auf einer Welle 6 sitzenden Triebling 4 und ein das Differential 3 umgebenden Tellerrad 5. Die Welle 6 ist in Lagern 7 geführt, an deren Äußeres ein Dichtring 8 anschließt. Das Differential 3 ist von der üblichen Bauart, daher nicht aufgeschnitten. Mit 9 ist eine zu einem Rad führende Halbwelle 9 bezeichnet. Das Getriebe hat hier zwei Drehteile: Triebling 4 und Welle 6 bilden einen ersten Drehteil, das Tellerrad 5 und gegebenenfalls auch Teile des Differentials bilden den zweiten Drehteil. Deren im Zuge des erfindungsgemäßen Verfahrens im Wesentlichen ganzflächig aufgebrachte Beschichtung ist wegen ihrer geringen Schichtdicke in Fig. 1 nicht darstellbar.

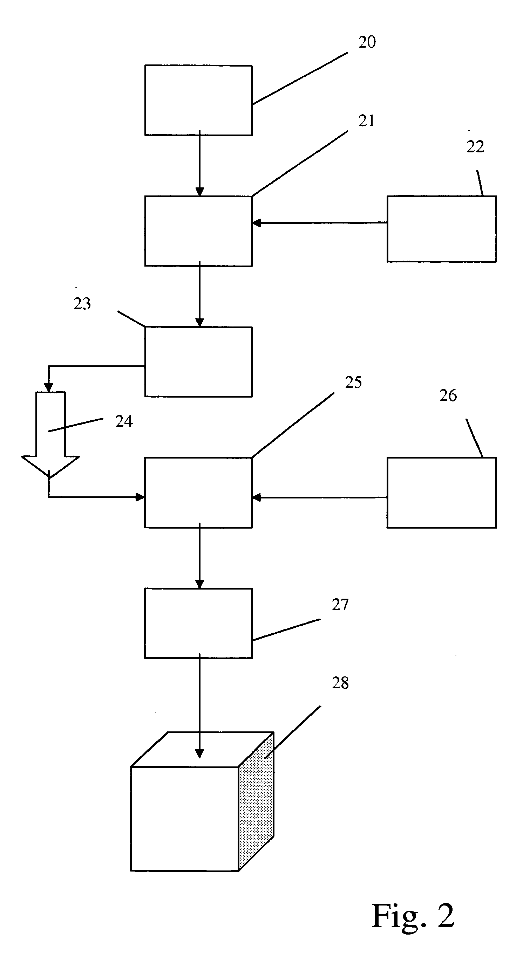

Das erfindungsgemäße Verfahren in der ersten Variante gemäß Fig. 2 beginnt mit dem Ende der mechanischen Bearbeitung der Drehteile, Kästchen 20. Die fertigen Drehteile werden in 21 in ein Bad getaucht, in dem sich ein Gemisch aus Wasser und/oder Alkohol oder einer anderen leicht verdampfbaren Flüssigkeit, einem Feststoff-Schmiermittel und einem Konservierungsmittel = Korrosionsschutzmittel befindet. Es könnte auch auf beliebige andere Weise aufgebracht werden. Dieses Gemisch wird in 22 zubereitet. Sodann werden die Drehteile in 23 getrocknet, durch Aufblasen trockener warmer Luft und/oder mittels infraroter Bestrahlung.

Die solcherart mit einer festen Beschichtung versehenen Drehteile werden verpackt und gelagert, oder versandt, was durch den Pfeil 24 angedeutet ist, oder gleich zur Getriebemontage 25 gebracht. Dort werden die Drehteile, und weitere Teile des Getriebes eingebaut und schließlich das fertig zusammengebaute Getriebe mit der vorgesehenen Menge Kühlflüssigkeit befüllt. Die Kühlflüssigkeit wird in 26 zubereitet. Sie ist ein Gemisch, das im Wesentlichen aus Wasser und einem Frostschutzmittel besteht.

Nun kommt das fertige und befüllte Getriebe auf den Prüfstand zum bei Hochleistungsgetrieben jedenfalls durchgeführten Probelauf, der hier als Jungfernlauf bezeichnet ist, weil erst dadurch in der oben beschriebenen Weise aus der Kühlflüssigkeit und der zuerst zwischen den Zahnrädern und später auch von anderen Regionen der Drehteile abgetragenen Beschichtung das Schmiermittel für den späteren Normalbetrieb gebildet wird. Dieses Schmiermittel auf Basis von Wasser kann noch mit weiteren Beimengungen versehen sein.

In einer Variante des Verfahrens wird dem zur Beschichtung bestimmten Gemisch in Kästchen 22 noch kein chemisches Konservierungsmittel zugesetzt, weil das Feststoff-Schmiermittel, gegebenenfalls mit Unterstützung eines Bindemittels, für die Konservierung ausreichenden Korrosionsschutz bietet. Das chemische Konservierungsmittel wird erst zusammen mit der Kühlflüssigkeit (im Wesentlichen zu 80 %, vorzugsweise mehr als 90 %, Wasser), Kästchen 26, in das Getriebe mit den beschichteten Teilen eingefüllt.

Wenn ein Tensid zum Einsatz kommt, so kann es sowohl dem Gemisch in Schritt a) als auch der Kühlflüssigkeit in Schritt b) beigemengt werden, bevorzugt in einem Mischungsbereich, der im betriebsbereiten eigentlichen flüssigen Schmiermittel einen Gehalt von 0,1 bis 2,0 % ergibt, der hinsichtlich Wirkung optimal ist.

### Beispiele

### Beispiel 1

In einem Rührkessel mit einer Dissolverscheibe werden 90,5 Liter entmineralisiertes Wasser vorgelegt und 0,5 kg Acetylenglykol zugegeben. Sodann werden darin 3,5 kg Methylcellulose (Viskosität 300 mPas 2%ig Höppler) gelöst. Danach werden 2,0 kg Grafit (d50 4,0 µm, 99,5% Kohlenstoff) und 3,5 kg eines Borsäurederivats, hergestellt durch Reaktion von Borsäureanhydrid mit Triethanolamin, zugesetzt. Diese Mischung wird danach mittels eines Dispergiergerätes homogenisiert. Nach der Homogenisierung werden Bauteile aus Stahl mit dem so hergestellten Korrosionsschutzmittel besprüht oder in diesem getaucht. Nach dem Trocknen bildet sich ein dichter Überzug, welcher die Teile vor oxidierendem Angriff schützt und mit wässrigen Schmiermittelzusammensetzungen gut verträglich ist.

### Beispiel 2

Gemäß dem Verfahren nach Beispiel 1 werden 92,0 Liter entmineralisiertes Wasser vorgelegt und 2,0 kg Polyvinylalkohol (vollhydrolysiert, Viskosität 30 mPas 2ig% Höppler) gelöst sowie 0,5 kg Acetylenglykol zugegeben. Danach werden 2,5 kg Grafit (d50 4,0 µm, und 99,5 % Kohlenstoff) und 2,0 kg Zinkstearat sowie 1,0 kg Borsäurederivat (hergestellt gemäß Beispiel 1) zugesetzt. Das so hergestellte Korrosionsschutzmittel kann entsprechend Beispiel 1 angewendet werden.

### Beispiel 3

Gemäß dem Verfahren nach Beispiel 1 werden 90,0 Liter entmineralisiertes Wasser vorgelegt und 0,5 kg Acetylenglykol zugegeben. Sodann werden darin 3,5 kg Methylcellulose (Viskosität 300 mPas 2%ig Höppler) gelöst. Es werden dann 2,5 kg Glimmerpulver (d50 2,0 µm) zugesetzt und 3,5 kg Borsäurederivat (hergestellt gemäß Beispiel 1) gelöst. Das Korrosionsschutzmittel kann entsprechend Beispiel 1 angewendet werden.

## Patentansprüche

1. Verfahren zur Herstellung und Erstinbetriebnahme eines Getriebes mit einem Gehäuse (1) und darin gelagerten Drehteilen (2, 3, 4, 5, 9), wobei das Getriebe mit einem ein Korrosionsschutzmittel enthaltenden flüssigen Schmiermittel auf Basis von Wasser befüllt ist,
bei dem
a) ein Gemisch auf die fertig bearbeiteten Drehteile (2, 3, 9) aufgebracht wird, dessen Basis eine verdampfbare Flüssigkeit ist und das ein zerkleinertes Feststoff-Schmiermittel enthält, und dann das Gemisch getrocknet wird, wodurch sich auf den Drehteilen eine Beschichtung bildet,
b) die Drehteile (2, 3, 9) mit der Beschichtung in das Gehäuse (1) des Getriebes eingebaut werden und das zusammengebaute Getriebe mit einer Kühlflüssigkeit (10) befüllt wird, welche im Wesentlichen Wasser ist,
c) das Getriebe einem Jungfernlauf unterzogen wird, so dass durch den Abrieb der Beschichtung der Drehteile (2, 3, 9) und die Verteilung des abgeriebenen Feststoff-Schmiermittels in der Kühlflüssigkeit (10) das flüssige Schmiermittel für den weiteren Betrieb gebildet wird.

2. Verfahren nach Anspruch 1, **dadurch gekennzeichnet, dass** der Kühlflüssigkeit (10) gemäß b) das Korrosionsschutzmittel zugesetzt wird.

3. Verfahren nach Anspruch 1, **dadurch gekennzeichnet, dass** dem Gemisch gemäß a) das Korrosionsschutzmittel zugesetzt wird.

4. Verfahren nach Anspruch 1, **dadurch gekennzeichnet, dass** die verdampfbare Flüssigkeit in dem Gemisch gemäß a) Wasser oder ein Alkohol mit einer Hydroxilgruppe, oder deren Mischung ist.

5. Verfahren nach Anspruch 1, **dadurch gekennzeichnet, dass** in der Kühlflüssigkeit (10) gemäß c) ein Frostschutzmittel enthalten ist, vorzugsweise ein Kohlenwasserstoff mit mindestens zwei Hydroxilgruppen beziehungsweise eine solche Verbindungen enthaltende Substanz.

6. Verfahren nach Anspruch 1, **dadurch gekennzeichnet dass** das flüssige Schmiermittel mehr als 50% Wasser, das Feststoffschmiermittel, ein Korrosionsschutzmittel und ein Tensid enthält.

7. Verfahren nach Anspruch 6, **dadurch gekennzeichnet, dass** das Feststoff-Schmiermittel einer der folgenden Stoffe oder eine Mischung daraus ist: Kohlenstoff in Form von Plättchen oder Stäbchen, Bor beziehungsweise hexagonales Bornitrid, Zinn, Molybdänsulfid, PTFE-Mikropulver, Glimmer, Eisenglimmer, Talkum oder Kaolin, oder eine geschwefelte Fettsäure.

8. Verfahren nach Anspruch 7, **dadurch gekennzeichnet, dass** das FeststoffSchmiermittel flockiger Graphit mit einer Teilchengröße von 15 Mikrometer oder kleiner ist, und zwar in einem Gewichtsverhältnis von 0,5 bis 30%, vorzugsweise bis 5% bezogen auf das flüssige Schmiermittel gemäß c).

9. Verfahren nach Anspruch 6, **dadurch gekennzeichnet, dass** das Feststoff-Schmiermittel Glimmerpulver ist, und zwar in einem Gewichtsverhältnis von 0,5 bis 30%, vorzugsweise bis 5% bezogen auf das flüssige Schmiermittel gemäß c).

10. Verfahren nach Anspruch 6, **dadurch gekennzeichnet, dass** das Korrosionsschutzmittel ein Borsäurederivat, vorzugsweise ein Reaktionsprodukt von Borsäureanhydrid mit Triäthanolamin, ist, und zwar in einem Gewichtsverhältnis von 0,5 bis 10% bezogen entweder auf das Gemisch gemäß a) oder auf das flüssige Schmiermittel gemäß c).

11. Verfahren nach Anspruch 6, **dadurch gekennzeichnet, dass** das Korrosionsschutzmittel ein Karbonsäuresalz aus der Gruppe Zinkstearat, Calziumstearat, Aluminiumstearat, Zinkoleat, Calziumoleat, Aluminiumoleat, ist oder enthält.

12. Verfahren nach Anspruch 6, **dadurch gekennzeichnet, dass** das Tensid ein Acetylenderivat, insbesondere Acetylenglykol ist, welches in einem Gewichtsverhältnis von 0,1 bis 2% dem Gemisch gemäß a) zugesetzt ist.

13. Verfahren nach Anspruch 6, **dadurch gekennzeichnet, dass** das flüssige Schmiermittel Methylcellulose enthält.

14. Verfahren nach Anspruch 6, **dadurch gekennzeichnet, dass** das flüssige Schmiermittel Polyvinylalkohol enthält.

15. Verfahren nach Anspruch 6, **dadurch gekennzeichnet, dass** das flüssige Schmiermittel ein Polysaccharid als Bindemittel enthält, welches dem Gemisch gemäß a) zugesetzt ist.

## Claims

1. Method for the production and initial start-up of a transmission system with a housing (1) and with, mounted therein, rotary parts (2, 3, 4, 5, 9), where a water-based liquid lubricant comprising an anti-corrosion agent has been charged to the transmission system,
where
a) a mixture which is based on a vaporizable liquid and which comprises a comminuted solid lubricant is applied to the finished rotary parts (2, 3, 9), and then the mixture is dried, thus forming a coating on the rotary parts,
b) the rotary parts (2, 3, 9) with the coating are installed into the housing (1) of the transmission system and a liquid coolant (10) which is in essence water is charged to the assembled transmission system,
c) the transmission system is brought into initial operation, and the liquid lubricant for further operation is thus formed by the abrasion of the coating of the rotary parts (2, 3, 9) and the distribution of the abraded solid lubricant in the liquid coolant (10).

2. Method according to Claim 1, **characterized in that** the anticorrosion agent is added to the liquid coolant (10) in accordance with b).

3. Method according to Claim 1, **characterized in that** the anticorrosion agent is added to the mixture in accordance with a).

4. Method according to Claim 1, **characterized in that** the vaporizable liquid in the mixture in accordance with a) is water or an alcohol having a hydroxy group, or a mixture thereof.

5. Method according to Claim 1, **characterized in that** the liquid coolant (10) in accordance with c) comprises an antifreeze, preferably a hydrocarbon having at least two hydroxy groups or a substance comprising compounds of that type.

6. Method according to Claim 1, **characterized in that** the liquid lubricant comprises more than 50% of water, the solid lubricant, an anticorrosion agent and a surfactant.

7. Method according to Claim 6, **characterized in that** the solid lubricant is one of the following substances or a mixture thereof: carbon in the form of lamellae or in elongate form, boron or hexagonal boron nitride, tin, molybdenum sulphide, PTFE micropowder, mica, micaceous iron oxide, talc powder or kaolin, or a sulphurated fatty acid.

8. Method according to Claim 7, **characterized in that** the solid lubricant is flake graphite with a particle size of 15 micrometres or less, and specifically in a ratio by weight of from 0.5 to 30%, preferably up to 5%, based on the liquid lubricant in accordance with c).

9. Method according to Claim 6, **characterized in that** the solid lubricant is mica powder, and specifically in a ratio by weight of 0.5 to 30%, preferably up to 5%, based on the liquid lubricant in accordance with c).

10. Method according to Claim 6, **characterized in that** the anticorrosion agent is a boric acid derivative, preferably a reaction product of boric anhydride with triethanolamine, and specifically in a ratio by weight of from 0.5 to 10%, based either on the mixture in accordance with a) or on the liquid lubricant in accordance with c).

11. Method according to Claim 6, **characterized in that** the anticorrosion agent is or comprises a carboxylic salt from the group of zinc stearate, calcium stearate, aluminium stearate, zinc oleate, calcium oleate, aluminium oleate.

12. Method according to Claim 6, **characterized in that** the surfactant is an acetylene derivative, in particular acetylene glycol, added in a ratio by weight of from 0.1 to 2% to the mixture in accordance with a).

13. Method according to Claim 6, **characterized in that** the liquid lubricant comprises methylcellulose.

14. Method according to Claim 6, **characterized in that** the liquid lubricant comprises polyvinyl alcohol.

15. Method according to Claim 6, **characterized in that** the liquid lubricant comprises a polysaccharide as binder added to the mixture in accordance with a).

## Revendications

1. Procédé pour la fabrication et la première mise en service d'un dispositif d'entraînement présentant un carter (1) et des pièces rotatives (2, 3, 4, 5, 9) qui y sont logées, le dispositif d'entraînement étant rempli d'un lubrifiant liquide contenant un agent de protection contre la corrosion à base d'eau, dans lequel
a) un mélange est appliqué sur les pièces rotatives usinées finies (2, 3, 9), dont la base est un liquide pouvant s'évaporer et qui contient un lubrifiant solide broyé, puis le mélange est séché, un revêtement se formant de ce fait sur les pièces rotatives,
b) les pièces rotatives (2, 3, 9) présentant le revêtement sont montées dans le carter (1) du dispositif d'entraînement et le dispositif d'entraînement assemblé est rempli d'un liquide de refroidissement (10), qui est essentiellement de l'eau,
c) le dispositif d'entraînement est soumis à un premier fonctionnement, de manière telle que le lubrifiant liquide pour le fonctionnement ultérieur est formé par l'abrasion du revêtement des pièces rotatives (2, 3, 9) et la répartition du lubrifiant solide abrasé dans le liquide de refroidissement (10).

2. Procédé selon la revendication 1, **caractérisé en ce que** le liquide de refroidissement (10) selon b) est additionné de l'agent de protection contre la corrosion.

3. Procédé selon la revendication 1, **caractérisé en ce que** le mélange selon a) est additionné de l'agent de protection contre la corrosion.

4. Procédé selon la revendication 1, **caractérisé en ce que** le liquide pouvant s'évaporer dans le mélange selon a) est de l'eau ou un alcool présentant un groupe hydroxyle, ou leur mélange.

5. Procédé selon la revendication 1, **caractérisé en ce qu'**un agent antigel est contenu dans le liquide de refroidissement (10) selon c), de préférence un hydrocarbure présentant au moins deux groupes hydroxyle ou une substance contenant ces composés.

6. Procédé selon la revendication 1, **caractérisé en ce que** le lubrifiant liquide contient plus de 50% d'eau, le lubrifiant solide, un agent de protection contre la corrosion et un agent tensioactif.

7. Procédé selon la revendication 6, **caractérisé en ce que** le lubrifiant solide est une des substances suivantes ou un mélange de celles-ci : carbone sous forme de plaquettes ou de bâtonnets, bore ou, selon le cas, nitrure de bore hexagonal, étain, sulfure de molybdène, micropoudre de PTFE, mica, fer micacé, talc ou kaolin ou un acide gras soufré.

8. Procédé selon la revendication 7, **caractérisé en ce que** le lubrifiant solide est du graphite sous forme de flocons, présentant une grosseur de particules de 15 micromètres ou moins et ce dans un rapport pondéral de 0,5 à 30%, de préférence 5% par rapport au lubrifiant solide selon c).

9. Procédé selon la revendication 6, **caractérisé en ce que** le lubrifiant solide est de la poudre de mica, et ce dans un rapport pondéral de 0,5 à 30%, de préférence 5% par rapport au lubrifiant solide selon C).

10. Procédé selon la revendication 6, **caractérisé en ce que** l'agent de protection contre la corrosion est un dérivé d'acide borique, de préférence un produit de réaction d'anhydride d'acide borique avec de la triéthanolamine, et ce dans un rapport pondéral de 0,5 à 10% par rapport, soit au mélange selon a), soit au lubrifiant liquide selon c).

11. Procédé selon la revendication 6, **caractérisé en ce que** l'agent de protection contre la corrosion est ou contient un sel d'acide carboxylique du groupe formé par le stéarate de zinc, le stéarate de calcium, le stéarate d'aluminium, l'oléate de zinc, l'oléate de calcium, l'oléate d'aluminium.

12. Procédé selon la revendication 6, **caractérisé en ce que** l'agent tensioactif est un dérivé d'acétylène, en particulier l'acétylèneglycol, qui est ajouté au mélange selon a) dans un rapport pondéral de 0,1 à 2%.

13. Procédé selon la revendication 6, **caractérisé en ce que** le lubrifiant liquide contient de la méthylcellulose.

14. Procédé selon la revendication 6, **caractérisé en ce que** le lubrifiant liquide contient du poly(alcool vinylique).

15. Procédé selon la revendication 6, **caractérisé en ce que** le lubrifiant liquide contient un polysaccharide comme liant, qui est additionné au mélange selon a).
